# EUROPÄISCHE PATENTANMELDUNG

(11) **EP 4 181 331 A1**
(43) Veröffentlichungstag der Anmeldung: **17.05.2023**
(21) Anmeldenummer: 22207714.1
(22) Anmeldetag: 16.11.2022
(51) Int. Cl.: H01R 43/02, H01R 43/28

(54) **SPANNVORRICHTUNG ZUM SPANNEN VON MEHREREN LEITERN**

(30) Priorität: 16.11.2021 DE 202021106253 U
(71) Anmelder: Komax Taping GmbH & Co. KG, 36151 Burghaun (DE)
(72) Erfinder: Ebert, Elmar, 36088 Hünfeld (DE); Schmelz, Steffen, 36419 Geisa ST Borsch (DE)
(74) Vertreter: Körner, Volkmar Horst

(57) **Zusammenfassung**

Eine Spannvorrichtung zum Spannen von mehreren Leitern (1, 2) hat ein Schiebeelement (5, 6) mit mehreren übereinanderliegenden federnden Segmenten (17, 18). Dem Schiebeelement (5, 6) gegenüberstehend ist ein Begrenzungselement (3, 4) angeordnet. Die Segmente (17, 108) passen sich den Durchmessern der Leiter (1, 2) an und richten Leitungsenden der Leiter (1, 2) aus.

## Beschreibung

Die Erfindung betrifft eine Spannvorrichtung zum Spannen von mehreren Leitern mit einem Schiebeelement und einem dem Schiebeelement gegenüberstehenden Begrenzungselement, wobei das Schiebeelement und das Begrenzungselement einen Verdichtungsraum begrenzen und wobei das Schiebeelement gegen das Begrenzungselement zur Verkleinerung des Verdichtungsraums bewegbar ist.

Solche Spannvorrichtungen werden in der Technik häufig eingesetzt, um Leitungsenden vor einer Bearbeitungsmaschine, wie einer Schweißmaschine zu halten oder zusammenzuspannen. Hierzu müssen die Leitungen gespannt werden, so dass ihre aus dem Verdichtungsraum herausragenden Leitungsenden der Bearbeitungsmaschine zugeführt werden können. Weiterhin besteht häufig der Wunsch Leitungsenden mit unterschiedlichen Querschnitten zu spannen.

Aus der EP 3 3752 054 B1 ist beispielsweise eine Vorrichtung bekannt, in der Leitungsenden in einen Verdichtungsraum geführt und dort miteinander verschweißt werden können. Zur variablen Begrenzung des Verdichtungsraums sind vier Elemente vorgesehen, welche sich derart gegeneinander verschieben lassen, dass der Verdichtungsraum verkleinert und die Leitungsenden gegeneinander verpresst werden. Eine Ausrichtung der aus dem Verdichtungsraum hervorstehenden Leitungsenden für eine weitere Anwendung ist hierdurch nur schwer möglich. Aus der DE 20 2010 001 324 U1 ist eine Vorrichtung zum Verdrillen von Leitungen bekannt geworden, bei der Spannvorrichtungen die zu verdrillenden Leitungen spannen. Die Spannvorrichtungen weisen jeweils Zangen zum Greifen einzelner Leitungen auf. Diese Zangen sind jedoch sehr aufwändig aufgebaut.

Die DE 10 2019 135 802 A1 offenbart eine Spannvorrichtung zum Spannen mehrerer Drahtenden, bei der mehrere Spannflächen um ein Drahtende gruppiert sind.

Der Erfindung liegt das Problem zugrunde, eine Spannvorrichtung der eingangs genannten Art so weiterzubilden, dass sie die Spannung von Leitern mit unterschiedlichen Querschnitten mit einer genauen Orientierung der aus dem Verdichtungsraum herausragenden Leitungsenden ermöglicht.

Dieses Problem wird erfindungsgemäß dadurch gelöst, dass zumindest eines der Bauteile des Begrenzungselements oder des Schiebeelements mehrere übereinander angeordnete Segmente aufweist und dass die Segmente federnd gestaltet sind.

Durch diese Gestaltung werden die Leiter einzeln von den Segmenten gehalten. Die einzelnen Segmente spannen daher die Leiter gegen das gegenüberstehende Bauteil des Schiebeelements oder des Begrenzungselements vor. Dabei richten die Segmente die Leiter mit einer vorhersehbaren Orientierung mit ihren aus dem Verdichtungsraum herausragenden Leitungsenden aus. Die federnd gestalteten Segmente können sich den unterschiedlichen Querschnitten der Leiter anpassen. Weiterhin werden durch die Segmente nur zwei einander gegenüberstehende Bauteile zu Spannung einer Vielzahl von Leitern mit unterschiedlichen Querschnitten benötigt. Die Spannvorrichtung ist hierdurch besonders einfach aufgebaut.

Querkräfte bei der Verkleinerung des Verdichtungsraums lassen sich gemäß einer anderen vorteilhaften Weiterbildung der Erfindung einfach vermeiden, wenn die Richtung der federnden Gestaltung der Segmente senkrecht zu dem gegenüberstehenden Bauteil des Begrenzungselements oder des Schiebeelements verläuft.

Die Anpassung an die unterschiedlichen Querschnitte der Leiter gestaltet sich gemäß einer anderen vorteilhaften Weiterbildung der Erfindung besonders einfach, wenn die Segmente parallel zu der vorgesehenen Längsachse der Leiter angeordnet sind.

Die in dem Verdichtungsraum gehaltenen Leiter werden gemäß einer anderen vorteilhaften Weiterbildung der Erfindung parallel zueinander ausgerichtet, wenn die Segmente in den Verdichtungsraum hinein weisende Wölbungen aufweisen. Weiterhin verringern die Wölbungen mögliche Beschädigungen der Leiter bei einem Zurückfedern einzelner Segmente.

Die Fertigung der Segmente gestaltet sich gemäß einer anderen vorteilhaften Weiterbildung der Erfindung besonders einfach, wenn einzelne übereinander angeordnete Bauteile die Segmente aufweisen.

Zur Vereinfachung der Montage der Segmente trägt es gemäß einer anderen vorteilhaften Weiterbildung der Erfindung bei, wenn die Segmente verschieblich in einem Gehäuse angeordnet sind und von einem gemeinsamen Federelement abgestützt sind. Durch diese Gestaltung lassen sich alle Segmente auf einem einzelnen Bauteil anordnen und gemeinsam montieren. Da die Segmente von einem gemeinsamen Federelement abgestützt sind, können diese starr ausgebildet sein und daher eine hohe Stabilität aufweisen.

Ein Verklemmen des Leiters zwischen zwei Segmenten lässt sich gemäß einer anderen vorteilhaften Weiterbildung der Erfindung zuverlässig vermeiden, wenn die Höhe der Segmente kleiner ist als der halbe Durchmesser des kleinsten zu spannenden Leiters. Durch diese Gestaltung wird sichergestellt, dass der kleinste zu spannende Leiter Kontakt mit zumindest zwei Segmenten hat.

Die Segmente lassen sich gemäß einer anderen vorteilhaften Weiterbildung der Erfindung einfach mit der vorgesehenen Steifigkeit fertigen, wenn die Segmente aus Federstahl gefertigt sind.

Zur weiteren Verringerung möglicher Beschädigungen der Leiter trägt es gemäß einer anderen vorteilhaften Weiterbildung der Erfindung bei, wenn das den Segmenten gegenüberstehende Bauteil des Begrenzungselementes oder des Schiebeelementes eine Oberfläche aus gummielastischem Material aufweist.

Bei einem Verschleiß des gummielastischen Materials lässt sich gemäß einer anderen vorteilhaften Weiterbildung der Erfindung besonders schnell Ersatz bereitstellen, wenn das den Segmenten gegenüberstehende Bauteil zwei aus gummielastischem Material gefertigte Blöcke aufweist und wahlweise mit dem einen Block oder dem anderen Block den Segmenten zugewandt ausrichtbar ist. Weiterhin können die beiden Blöcke auch aus unterschiedlich weichem gummielastischem Material gefertigt sein und die Spannvorrichtung damit für unterschiedlich starke Leiter angepasst werden.

Die Spannvorrichtung gestaltet sich gemäß einer anderen vorteilhaften Weiterbildung der Erfindung konstruktiv besonders einfach, wenn die Segmente auf dem Schiebeelement angeordnet sind.

Die Spannvorrichtung ermöglicht gemäß einer anderen vorteilhaften Weiterbildung der Erfindung die Verbindung mehrerer einander gegenüberstehender Leitungsenden, wenn zwei Paare von Begrenzungselementen und Schiebeelementen auf Abstand zueinander angeordnet sind. Da dank der Erfindung die aus den Verdichtungsräumen hervorstehenden Leitungsenden durch die Segmente mit einer vorhersehbaren Orientierung herausragen, lassen sich durch die beiden mit Abstand zueinander angeordneten Paaren der Begrenzungselemente und der Schiebeelemente einander gegenüberstehende Leitungsenden miteinander verbinden. Eine solche Verbindung kann beispielsweise in Ultraschallschweißmaschinen erfolgen.

Die genaue Orientierung der aus dem Verdichtungsraum hervorstehenden Leitungsenden gestaltet sich gemäß einer anderen vorteilhaften Weiterbildung der Erfindung besonders einfach, wenn zumindest eines der Bauteile des Schiebeelements oder des Begrenzungselements eine Führung mit einem Feststellmittel zur Ausrichtung der aus dem Verdichtungsraum herausragenden Leiter aufweist. Diese genaue Orientierung ist insbesondere bei den beiden Paaren von Begrenzungselementen und Schiebeelementen von Vorteil, weil sich hierdurch die Position der miteinander zu verbindenden Leitungsenden genau einstellen lässt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: perspektivisch eine Spannvorrichtung mit zwei Paaren von Begrenzungselementen und Schiebeelementen,
- Fig.2: vergrößert die beiden Paare der Begrenzungselemente und der Schiebeelemente in einer seitlichen Ansicht,
- Fig.3: eine weitere Ausführungsform der Spannvorrichtung beim Spannen mehrerer Leiter mit unterschiedlichen Querschnitten,
- Fig.4: stark vergrößert mehrere Segmente der Schiebeelemente an den Leitern aus Figur 3,
- Fig.5: stark vergrößert das Schiebeelement aus Figur 3 in einer perspektivischen Darstellung.

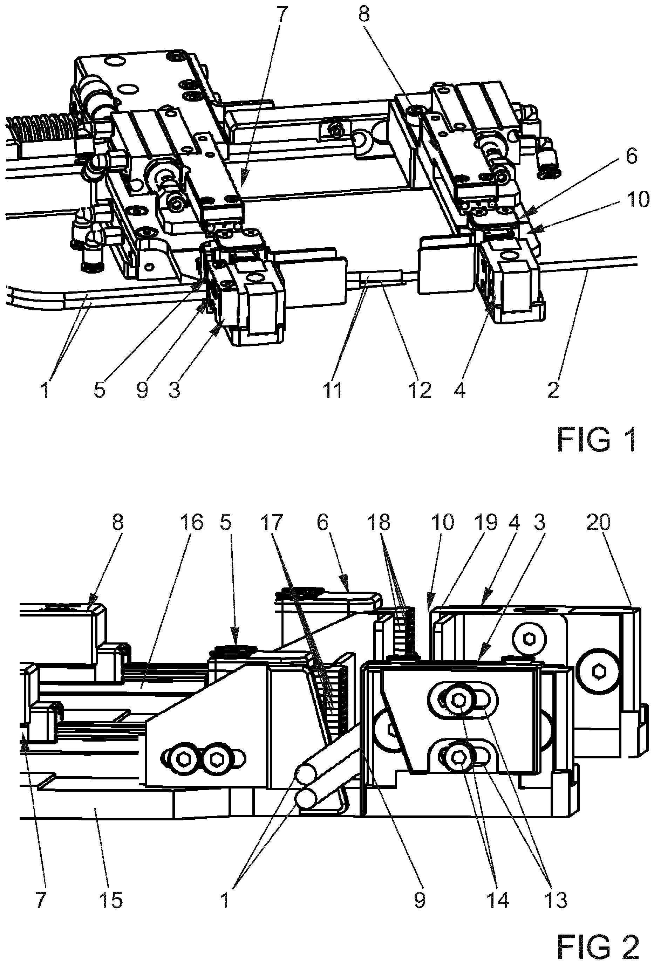

Figur 1 zeigt eine Spannvorrichtung zum Spannen mehrerer Leiter 1, 2 mit zwei Paaren von Begrenzungselementen 3, 4 und Schiebeelementen 5, 6. Die Schiebeelemente 5, 6 lassen sich jeweils von Pneumatikzylindern 7, 8 gegen die Leiter 1, 2 bewegen. Die Schiebeelemente 5, 6 und die Begrenzungselemente 3, 4 begrenzen Verdichtungsräume 9, 10, in denen die Leiter 1, 2 eingespannt sind. Leitungsenden 11, 12 der Leiter 1, 2 ragen aus den Verdichtungsräumen 9, 10 heraus und berühren einander. In den aneinander berührenden Bereichen lassen sich die Leitungsenden 11, 12 beispielsweise mit einer nicht dargestellten Ultraschallschweißmaschine miteinander verschweißen oder mechanisch miteinander verpressen.

Figur 2 zeigt die beiden Paare der Begrenzungselemente 3, 4 und der Schiebeelemente 5, 6 in einer vergrößerten seitlichen Ansicht. Hierbei ist zu erkennen, dass die Begrenzungselemente 3, 4 Führungen 13 mit als Schrauben ausgebildeten Feststellmitteln 14 aufweisen. Die Schiebeelemente 5, 6 sind auf Längsträgern 15, 16 verschieblich angeordnet und lassen sich auf diesen Längsträgern 15, 16 von den Pneumatikzylindern 7, 8 verschieben. Zudem haben die Schiebeelemente 5, 6 mehrere federelastische Segmente 17, 18, welche sich den Querschnitten der Leiter 1, 2 anpassen. Die Begrenzungselemente 3, 4 haben jeweils zwei Blöcke 19, 20 mit gummielastischer Oberfläche zur Abstützung der Leiter 1, 2.

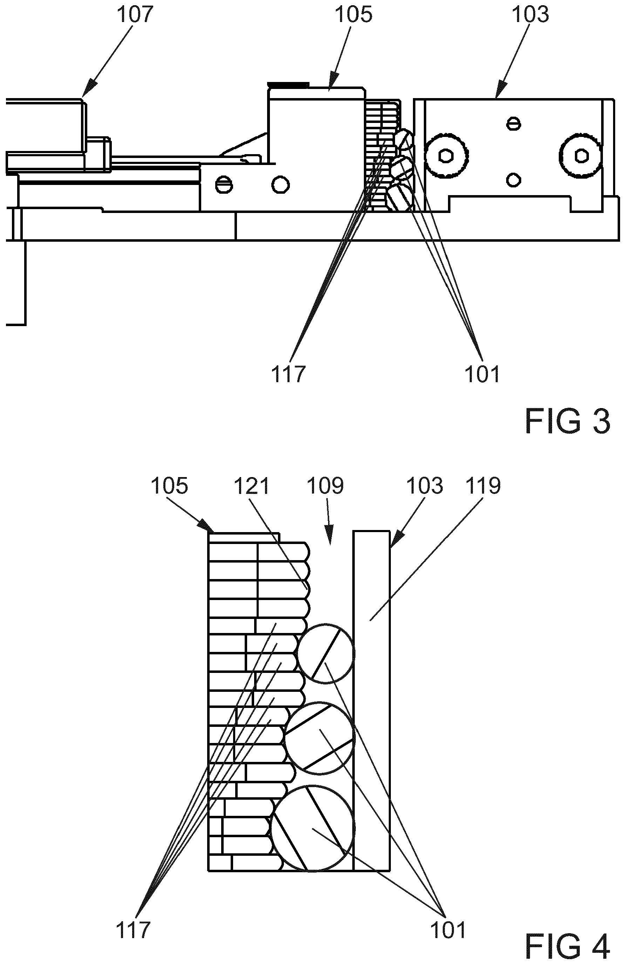

Figur 3 zeigt eine weitere Ausführungsform der Spannvorrichtung mit einem Begrenzungselement 103 und einem Schiebeelement 105 in einer Seitenansicht, beim Spannen von drei Leitern 101 mit unterschiedlichen Querschnitten. Das Schiebeelement 105 hat mehrere übereinander angeordnete federnde Segmente 117, welche sich den Querschnitten der einzelnen Leiter 101 anpassen. Ein Pneumatikzylinder 107 spannt das Schiebeelement 105 in Richtung des Begrenzungselementes 103 vor und begrenzt damit einen Verdichtungsraum 109 zur Aufnahme der Leiter 101. Das Begrenzungselement 103 hat einen Block 119 mit einer Oberfläche aus gummielastischem Material.

Figur 4 zeigt stark vergrößert den von den Segmenten 117 des Schiebeelementes 105 und dem Block 119 mit der Oberfläche aus gummielastischem Material des Gegenelementes 103 begrenzten Verdichtungsraum 109. Hierbei ist zu erkennen, dass die einzelnen Segmente 117 durch ihre federelastische Eigenschaft einzeln federn und damit die unterschiedlichen Querschnitte der einzelnen Leiter 101 umgreifen. Damit sind die einzelnen Leiter 101 senkrecht zur Zeichenebene orientiert, wie es in der Ausführungsform nach den Figuren 1 und 2 dargestellt ist. Die Segmente 117 weisen jeweils eine in den Verdichtungsraum 109 weisende Wölbung 121 auf. Weiterhin haben die Segmente 117 eine geringere Höhe, als es dem kleinsten zu spannenden Radius der Leiter 101 entspricht. Damit liegen mindestens drei Segmente 117 an den Leitern 101 an.

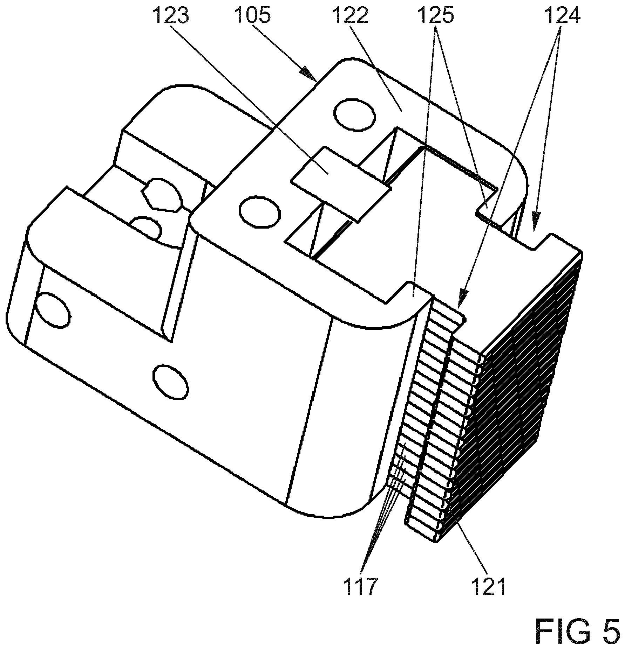

Figur 5 zeigt das Schiebeelement aus Figur 3 in einer perspektivischen Darstellung mit einem geöffneten Gehäuse 122. In dem Gehäuse 122 sind die Segmente 117 verschieblich geführt und an einem gemeinsamen Federelement 123 abgestützt. Das gemeinsame Federelement 123 ist hier als gummielastischer Block ausgebildet. Führungen der Segmente 117 sind durch einzelne Führungsausnehmungen 124 in den Segmenten 117 gebildet, in die Führungsstege 125 des Gehäuses 122 eindringen.

## Patentansprüche

1. Spannvorrichtung zum Spannen von mehreren Leitern (1, 2, 101) mit einem Schiebeelement (5, 6, 105) und einem dem Schiebeelement (5, 6, 105) gegenüberstehenden Begrenzungselement (3, 4, 103), wobei das Schiebeelement (5, 6, 105) und das Begrenzungselement (3, 4, 103) einen Verdichtungsraum (9, 10, 109) begrenzen und wobei das Schiebeelement (5, 6, 105) gegen das Begrenzungselement (3, 4, 103) zur Verkleinerung des Verdichtungsraums (9, 10, 109) bewegbar ist, **dadurch gekennzeichnet, dass** zumindest eines der Bauteile des Begrenzungselements (3, 4, 103) oder des Schiebeelements (5, 6, 105) mehrere übereinander angeordnete Segmente (17, 18, 117) aufweist und dass die Segmente (17, 18, 117) federnd gestaltet sind.

2. Spannvorrichtung nach Anspruch 1, **dadurch gekennzeichnet, dass** die Richtung der federnden Gestaltung der Segmente (17, 18, 117) senkrecht zu dem gegenüberstehenden Bauteil des Begrenzungselements (3, 4, 103) oder des Schiebeelements (5, 6, 105) verläuft.

3. Spannvorrichtung nach Anspruch 1 oder 2, **dadurch gekennzeichnet, dass** die Segmente (17, 18, 117) parallel zu der vorgesehenen Längsachse der Leiter (1, 2, 101) angeordnet sind.

4. Spannvorrichtung nach zumindest einem der Ansprüche 1 bis 3, **dadurch gekennzeichnet, dass** die Segmente (17, 18, 117) in den Verdichtungsraum (9, 10, 109) hinein weisende Wölbungen (121) aufweisen.

5. Spannvorrichtung nach zumindest einem der Ansprüche 1 bis 4, **dadurch gekennzeichnet, dass** einzelne übereinander angeordnete Bauteile die Segmente (17, 18, 117) aufweisen.

6. Spannvorrichtung nach zumindest einem der Ansprüche 1 bis 4, **dadurch gekennzeichnet, dass** die Segmente (17, 18, 117) verschieblich in einem Gehäuse (122) angeordnet sind und von einem gemeinsamen Federelement (123) abgestützt sind.

7. Spannvorrichtung nach zumindest einem der Ansprüche 1 bis 6, **dadurch gekennzeichnet, dass** die Höhe der Segmente (17, 18, 117) kleiner ist als der halbe Durchmesser des kleinsten zu spannenden Leiters.

8. Spannvorrichtung nach zumindest einem der Ansprüche 1 bis 7, **dadurch gekennzeichnet, dass** die Segmente (17, 18, 117) aus Federstahl gefertigt sind.

9. Spannvorrichtung nach zumindest einem der Ansprüche 1 bis 8, **dadurch gekennzeichnet, dass** das den Segmenten (17, 18, 117) gegenüberstehende Bauteil des Begrenzungselementes (3, 4, 103) oder des Schiebeelementes (5, 6, 105) eine Oberfläche aus gummielastischem Material aufweist.

10. Spannvorrichtung nach zumindest einem der Ansprüche 1 bis 9, **dadurch gekennzeichnet, dass** das den Segmenten (17, 18, 117) gegenüberstehende Bauteil zwei aus gummielastischem Material gefertigte Blöcke (19, 20, 119) aufweist und wahlweise mit dem einen Block (19, 20, 119) oder dem anderen Block (19, 20, 119) den Segmenten (17, 18, 117) zugewandt ausrichtbar ist.

11. Spannvorrichtung nach zumindest einem der Ansprüche 1 bis 10, **dadurch gekennzeichnet, dass** die Segmente (17, 18, 117) auf dem Schiebeelement (5, 6, 105) angeordnet sind.

12. Spannvorrichtung nach zumindest einem der Ansprüche 1 bis 11, **dadurch gekennzeichnet, dass** zwei Paare von Begrenzungselementen (3, 4) und Schiebeelementen (5, 6) auf Abstand zueinander angeordnet sind.

13. Spannvorrichtung nach zumindest einem der Ansprüche 1 bis 12, **dadurch gekennzeichnet, dass** zumindest eines der Bauteile des Schiebeelements (5, 6, 105) oder des Begrenzungselements (3, 4, 103) eine Führung (13) mit einem Feststellmittel (14) zur Ausrichtung der aus dem Verdichtungsraum (9, 10, 109) herausragenden Leiter (1, 2, 101) aufweist.
